# EUROPEAN PATENT SPECIFICATION

(11) **EP 1 492 335 B1**
(45) Date of publication and mention of the grant of the patent: **13.12.2006**
(21) Application number: 04013885.1
(22) Date of filing: 14.06.2004
(51) Int. Cl.: H04N 5/44, H04N 7/01, H04N 5/262

(54) **Video signal processing apparatus**
Vorrichtung zur Videosignalverarbeitung
Appareil pour le traitement de signals video

(30) Priority: 27.06.2003 JP 2003184241
(43) Date of publication of application: 29.12.2004
(73) Proprietor: Pioneer Corporation, Meguro-ku, Tokyo (JP)
(72) Inventor: Matsuno, Atsushi, c/o Pioneer Ohmori Plant, Ohta-ku Tokyo (JP); Ando, Hiroshi, c/o Pioneer Ohmori Plant, Ohta-ku Tokyo (JP); Ochiai, Kazunori, c/o Pioneer Ohmori Plant, Ohta-ku Tokyo (JP); Nagakubo, Tetsuro, c/o Pioneer Ohmori Plant, Ohta-ku Tokyo (JP)
(74) Representative: Neugebauer, Jürgen

(56) References cited:
- US-A- 5 956 092
- US-A1- 2003 035 482

## Description

### BACKGROUND OF THE INVENTION

### 1. Field of the Invention

The present invention relates to a video signal processing apparatus for converting an input video signal into a video signal having a picture size with an aspect ratio different from an aspect ratio of the video image thereof.

In particular, the present invention relates to a video signal processing apparatus according to the preamble of claim 1, such as it is for example known from US 5,956,092.

### 2. Description of the Related Art

In the current television broadcast, implemented are SDTV (standard definition television) broadcast having an aspect ratio of 4 : 3 and HDTV (high definition television) broadcast having an aspect ratio of 16 : 9. In the HDTV broadcast, when carrying out a broadcast with an SDTV picture signal having the aspect ratio of 4 : 3, the broadcast station converts the signal into a picture signal having an aspect ratio of 16 : 9 and then sends it into the air. Consequently, when the converted picture signal is received by an HDTV television receiver, usually a picture having the aspect ratio of 4 : 3 is displayed in the center of the screen while black blanks are displayed on the left and right side thereof.

In this manner, there is a problem that, when displaying a main picture having an aspect ratio different from that of the television receiver screen together with blanks, the picture being displayed is perceived unnatural and felt unsuitable by the viewer due to the presence of blanks.

### SUMMARY OF THE INVENTION

It is an object of the present invention to provide a video signal processing apparatus capable of converting a video signal having a main picture and blanks into a video signal lessened in unsuitableness of picture.

This object is achieved by a video signal processing apparatus according to claim 1. The dependent claims relate to advantageous embodiments.

### BRIEF DESCRIPTION OF THE DRAWINGS

Fig. 1 is a block diagram showing a video signal processing apparatus according to the present invention;
Fig. 2 shows a picture with an aspect ratio of 16 : 9 having blanks in the left and right of the screen;
Fig. 3 is a waveform diagram showing the operation of the apparatus of Fig. 1; and
Fig. 4 shows a picture with an aspect ratio of 16 : 9 having processed pictures in the left and right of the screen.

### DETAILED DESCRIPTION OF THE INVENTION

Now an embodiment of the present invention will be explained in detail while referring to the drawings.

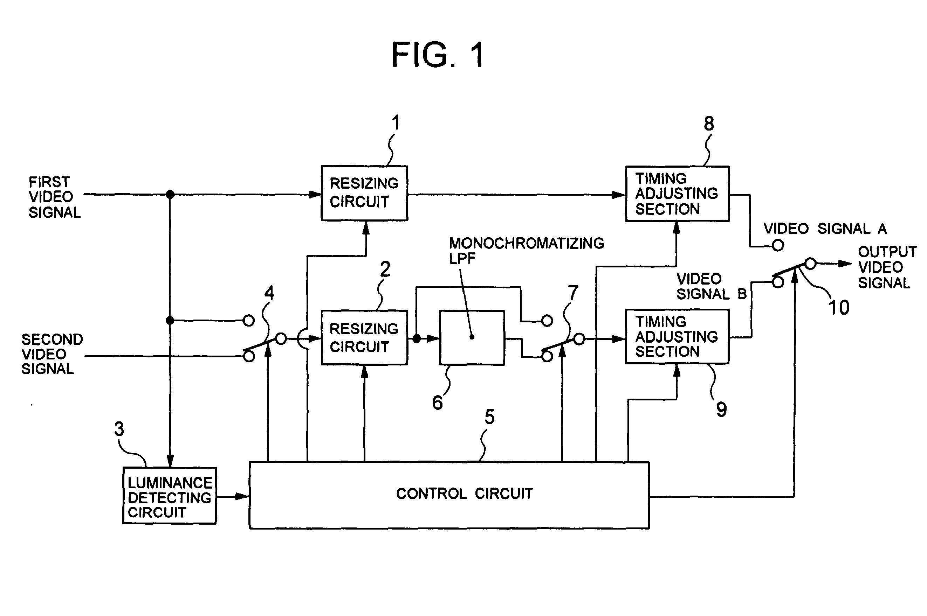

Fig. 1 shows an video signal processing apparatus according to the present invention. The video signal processing apparatus is provided within a television receiver having a display screen in an aspect ratio of 16 : 9, e.g. a PDP (plasma display panel) television receiver. The video signal processing apparatus is arranged to input therein two video signals. The first video signal is an SDTV (standard definition television) video signal having an aspect ratio of 4 : 3, e.g. an NTSC-schemed video signal. The second video signal, although not limited, is an SDTV video signal having an aspect ratio of 4 : 3 or an HDTV (high definition television) video signal having an aspect ratio of 16 : 9. The video signal processing apparatus has an output connected to an image input system of the television receiver.

The video signal processing apparatus comprises resizing circuits 1, 2, a luminance detecting circuit 3, selector switches 4, 7, 10, a control circuit 5, a monochromatizing LPF 6 and timing adjusting sections 8, 9. The resizing circuit 1 is supplied with the first video signal. The resizing circuit 1 converts the first video signal so that the on-screen display based on the first video signal can be vertically enlarged. For example, the first video signal is line-interpolated and converted into an video signal matched for the number of scanning lines of the television receiver. Meanwhile, vertical black stripes are caused to form blanks at both the left and right of the screen. Because the first video signal is in the number of scanning lines of 525, the first video signal is converted into an HDTV video signal having the number of scanning lines of 1080 or 720. The resizing circuit 1 has an output connected with a luminance detecting circuit 3, a selector switch 4 and a timing adjusting section 8.

The luminance detecting circuit 3 detects a luminance level of the output video signal of the resizing circuit 1. The luminance detection signal representative of the detection result is supplied to a control circuit 5.

The selector switch 4 is supplied with both an output video signal of the resizing circuit 1 and a second video signal. The selector switch 4 selectively supplies one of the first and second video signals to the resizing circuit 2, in response to an instruction of the control circuit 5.

The resizing circuit 2 converts the video signal so that on-screen display based on the video signal supplied through the selector switch 4 can be enlarged to the left and right. The resizing circuit 2 decompresses the video signal equally in time to the left and right of the screen. The resizing circuit 2 is placed in a through state when an HDTV video signal is supplied as the second video signal.

The resizing circuit 2 has an output connected with a monochromatizing LPF 6. The monochromatizing LPF 6 allows only the lower component of the video signal supplied from the sizing circuit 2 to pass, thereby monochromatizing the video signal.

The monochromatizing LPF 6 is provided with a selector switch 7. The selector switch 7 has one input connected with an output of the monochromatizing LPF 6 and the other input connected with an output of the resizing circuit 2. The selector switch 7 selectively supplies one of an output video signal of the resizing circuit 2 and an output video signal of the monochromatizing LPF 6 to the timing adjusting section 9, in response to an instruction of the control circuit 5.

The timing adjusting sections 8, 9 adjust the output timing of a supplied video signal, in response to an instruction of the control circuit 5. The timing adjusting sections 8, 9 have an output connected with a selector switch 10 for combining the video signal. The output of the selector switch 10 is provided as an output of the video signal processing apparatus. The selector switch 10 selectively outputs any one of output video signals of the timing adjusting sections 8, 9, in response to an instruction of the control circuit 5.

The control circuit 5 issues various instructions in accordance with the luminance detection signal supplied from the luminance detecting circuit 3. Meanwhile, although not shown, the horizontal synchronizing signal in an output video signal of the resizing circuit 1 is supplied to the control circuit 5.

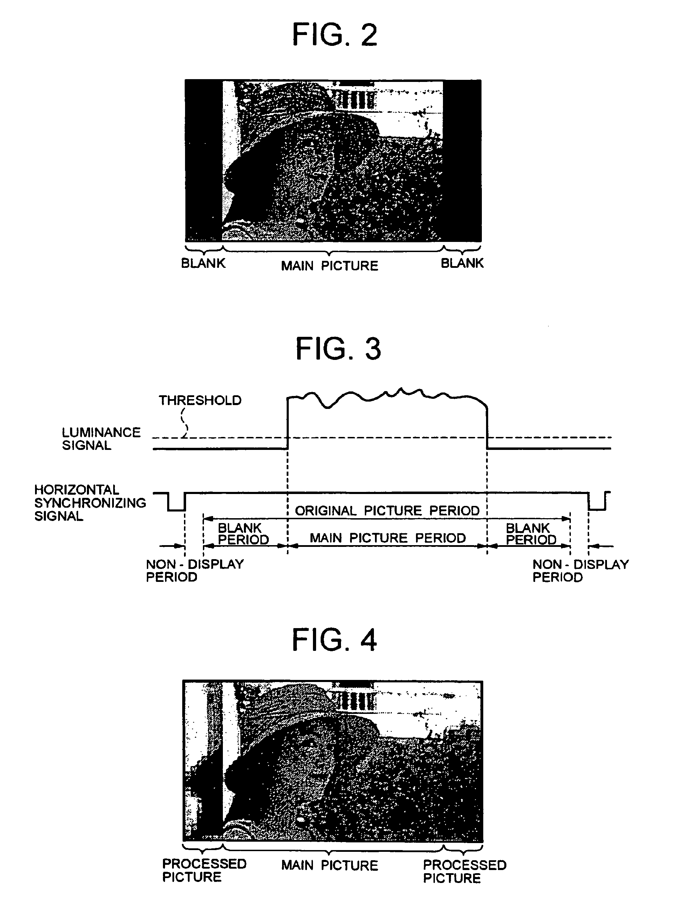

In the video signal processing apparatus thus arranged, the on-screen picture represented by a video signal output from the resizing circuit 1 is caused with black blanks at left and right of the screen for example, as shown in Fig. 2. The picture itself except for blanks has an aspect ratio of 4 : 3.

The video signal having blanks output from the resizing circuit 1 has a luminance signal and a horizontal synchronizing signal, as shown in Fig. 3. The output video signal of the resizing circuit 1 is supplied to the timing adjusting section 8 and also to the luminance detecting circuit 3.

The luminance detecting circuit 3 takes a luminance period when the output video signal of the resizing circuit 1 is greater than a threshold, to generate a luminance detection signal as shown in Fig. 3. The luminance detection signal is supplied to the control circuit 5. The control circuit 5 takes, as a first blank period, a period of after generating a horizontal synchronizing signal and before generating a luminance detection signal. Furthermore, it determines as a second blank period a period of after extinction of the luminance detection signal and before an occurrence of a horizontal synchronizing signal. Incidentally, actually each blank period has a non-display period relative to the horizontal synchronizing signal, as shown in Fig. 3.

In the state that the output video signal of the resizing circuit 1 is supplied to the resizing circuit 2 through the selector switch 4, the resizing circuit 2 is instructed a luminance period of within an output video signal of the resizing circuit 1, i.e. real video period, by the control circuit 5. Accordingly, it converts the video signal in response to the instruction such that the real video part is enlarged to the left and right. The video signal converted by the resizing circuit 2 has an aspect ratio of 16 : 9, being on the real image free of a blank. The converted video signal is supplied to the monochromatizing LPF 6 where it turns into a monochromatic video signal removed of color component.

To the selector switch 7, supplied are an output video signal of the resizing circuit 2 and a monochromatic video signal thereof. The selector switch 7 selects any one of the output video signal of the resizing circuit 2 and an output video signal of the monochromatizing LPF 6, in response to an instruction of the control circuit 5, and supplies the selected signal to the timing adjusting section 9. The control circuit 5 generates a timing adjusting command for the timing adjusting sections 8, 9 to take synchronization on the video signal with each other. Due to timing adjustment by the timing adjusting sections 8, 9, synchronous agreement is taken mutually between an video signal A having blanks and a video signal B inserted with a real image in each of the blanks that are to be supplied to the selector switch 10.

The selector switch 10, in each blank period of the video signal A having blanks, selects and outputs the video signal B in response to an instruction from the control circuit 5. Meanwhile, out of the blank period, the video signal A is selected and output by the selector switch 10. Accordingly, as shown in Fig. 4, the video signal outputted from the selector switch 10 represents a picture based on the video signal B in a region corresponding to each of the left and right blanks on the screen of the display having an aspect ratio of 16 : 9. In the other region, represented is the main image based on the video signal A having an aspect ratio of 4 : 3.

In the above embodiment, a monochromatic picture related to the main picture is arranged in the region corresponding to each of the left and right blanks on the screen. However, the arrangement may be by a defocused or enlarged picture related to the main picture represented by the output video signal of the resizing circuit 2.

The above embodiment explained the case that the blanks of the video signal are present at left and right on the screen. However, without limited to that, the present invention is applicable to the case that blanks are present at the upper and lower on the screen, the case that they exist at the upper and lower and left and right on the screen, or the case that a single blank is present at one side on the screen.

Further, the above embodiment explained the case that the video signal with a picture size having an aspect ratio of 4 : 3 is converted into an video signal with a picture size having an aspect ratio of 16 : 9 to thereby making an image on each of the blanks. However, image processing is similarly possible for the case to directly input a video signal with a picture size having an aspect ratio of 16 : 9 representing a main picture in a picture size having an aspect ratio of 4 : 3 and blanks in the other display region than the main picture.

As described above, according to the present invention, since processed images based on the main picture are displayed in regions corresponding to blanks of a display picture, the viewer is allowed to view it as a picture integrated with the display picture. There is less unsuitableness as compared to the case with blanked display. Furthermore, image sticking prevention of the display-panel can be expected as compared to the case of blanked display.

## Claims

1. A video signal processing apparatus for picture-processing a video signal which is representative of a main picture having a picture size of a first aspect ratio and at least one blank lying in a region other than the main picture and which has a picture size of a second aspect ratio different from the first aspect ratio, the video signal processing apparatus comprising:
blank detecting means (3) for detecting a blank signal portion of the video signal; and
means (2, 4 to 7, 9) for generating a video signal representative of a processed picture based on a video signal corresponding to the main picture, in accordance with a detection of the blank signal portion by the blank detecting means;
**characterized in that** the video signal processing apparatus includes switching means (10) for outputting a video signal (A) representative of the main picture having the picture size of the first aspect ratio and outputting the video signal (B) representative of the processed picture in place of a video signal representative of the at least one blank in the region other than the main picture.

2. A video signal processing apparatus according to claim 1, wherein the processed picture is a monochromatic picture.

3. A video signal processing apparatus according to claim 1, wherein the processed picture is an enlarged picture.

4. A video signal processing apparatus according to claim 1, wherein the processed picture is an unfocused picture.

## Patentansprüche

1. Eine Vorrichtung zur Videosignalverarbeitung zur Bildverarbeitung eines Videosignals, welches repräsentativ ist für ein Hauptbild mit einer Bildgröße mit einem ersten Bildseitenformat und zumindest einem Austast-/Leerbereich, der in einem anderem Bereich liegt als das Hauptbild, und welcher einer Bildgröße aufweist, mit einem zweiten Bildseitenformat, welches sich vom ersten Bildseitenformat unterscheidet, wobei die Vorrichtung zur Videosignalverarbeitung umfasst:
Austasterfassungsmittel (3) zum Erfassen eines Austastsignalbereichs des Videosignals; und
Mittel (2, 4 bis 7, 9) zum Erzeugen eines Videosignals, welches repräsentativ ist für ein verarbeitetes Bild, basierend auf einem Videosignal, welches den Hauptbild entspricht, in Übereinstimmung mit einer Erfassung des Austastsignalbereichs durch die Austasterfassungsmittel;
**dadurch gekennzeichnet** das die Vorrichtung zur Videosignalverarbeitung Umschaltmittel (10) umfasst zur Ausgabe eines Videosignals (A), welches repräsentativ ist für das Hauptbild, mit einer Bildgröße gemäß dem ersten Bildseitenformat, und Ausgabe des Videosignals (B) welches repräsentativ ist für das verarbeitete Bild anstelle eines Videosignals, welches repräsentativ ist für die zumindest eine Austastlücke in dem Bereich, der sich vom Hauptbild unterscheidet.

2. Vorrichtung zur Videosignalverarbeitung nach Anspruch 1, wobei das verarbeitete Bild ein monochromatisches Bild ist.

3. Vorrichtung zur Videosignalverarbeitung nach Anspruch 1, wobei das verarbeitete Bild ein vergrößertes Bild ist.

4. Vorrichtung zur Videosignalverarbeitung nach Anspruch 1, wobei das verarbeitete Bild ein unfokusiertes Bild ist.

## Revendications

1. Appareil pour le traitement de signaux vidéo pour le traitement d'image d'un signal vidéo qui est représentatif d'une image principale présentant une taille d'image d'un premier rapport hauteur/largeur et d'au moins un blanc situé dans une région autre que l'image principale et qui a une taille d'image d'un second rapport hauteur/largeur différent du premier rapport hauteur/largeur, l'appareil pour le traitement de signaux vidéo comportant :
un moyen de détection de blancs (3) pour détecter une partie de signal relative à un blanc dans le signal vidéo; et
un moyen (2, 4 à 7, 9) pour générer un signal vidéo représentatif d'une image traitée basée sur un signal vidéo correspondant à l'image principale conformément à une détection de la partie de signal relative au blanc détectée par le moyen de détection de blancs;
**caractérisé en ce que** l'appareil pour le traitement de signaux vidéo comprend un moyen de commutation (10) pour émettre un signal vidéo (A) représentatif de l'image principale présentant la taille de l'image du premier rapport hauteur/largeur et pour émettre un signal vidéo (B) représentatif de l'image traitée à la place d'un signal vidéo représentatif de l'unique blanc au moins dans la région autre que l'image principale.

2. Appareil pour le traitement de signaux vidéo selon la revendication 1, dans lequel l'image traitée est une image monochromatique.

3. Appareil pour le traitement de signaux vidéo selon la revendication 1, dans lequel l'image traitée est une image agrandie.

4. Appareil pour le traitement de signaux vidéo selon la revendication 1, dans lequel l'image traitée est une image non focalisée.
